Europäisches Patentamt

European Patent Office

Office européen des brevets

(19)

(11) **EP 0 889 331 B1**

(12) **FASCICULE DE BREVET EUROPEEN**

(45) Date de publication et mention
de la délivrance du brevet:
**17.09.2003 Bulletin 2003/38**

(51) Int Cl.[7]: **G01V 1/30**

(21) Numéro de dépôt: **98401568.5**

(22) Date de dépôt: **25.06.1998**

(54) **Méthode pour modéliser en 3D l'impédance d'un milieu hétérogène**

Methode zur 3D Modellierung der Impedanz in einem heterogenen Volumen der Untergrundes

Method for 3D modelling of the impedance of a heterogeneous volume of the subsurface

(84) Etats contractants désignés:
**DE DK GB NL**

(30) Priorité: **04.07.1997 FR 9708512**

(43) Date de publication de la demande:
**07.01.1999 Bulletin 1999/01**

(73) Titulaire: **Institut Français du Pétrole**
**92852 Rueil-Malmaison Cedex (FR)**

(72) Inventeurs:
• **Grizon, Laurent**
**78420 Carrières Sur Seine (FR)**
• **Leger, Michel**
**92500 Rueil-Malmaison (FR)**

• **Richard, Vincent**
**75012 Paris (FR)**
• **Dumont, Frédéric**
**78500 Sartrouville (FR)**
• **Dequirez, Pierre-Yves**
**78960 Voisins le Bretonneux (FR)**

(56) Documents cités:
EP-A- 0 354 112                   WO-A-97/38330
WO-A-97/41456                DE-A- 2 535 259
US-A- 5 113 192

• LORTZER G J M ET AL: "AN INTEGRATED
APPROACH TO LITHOLOGIC INVERSION-PART
I" GEOPHYSICS, vol. 57, no. 2, 1 février 1992,
pages 233-244, XP000330780

## Description

La présente invention concerne une méthode pour modéliser en 3D l'impédance d'un milieu hétérogène à partir d'ondes réfléchies par les discontinuités du milieu, en réponse à des ondes émises dans le milieu. Les ondes utilisées peuvent être des ondes élastiques émises par une source sismique, ou des ondes électromagnétiques émises par un radar par exemple, etc.

La méthode selon l'invention trouve des applications notamment pour l'étude du sous-sol dans le but par exemple de rechercher des gisements d'hydrocarbures.

On connaît différentes approches pour convertir des données sismiques en impédances acoustiques, qui diffèrent par le mode de paramétrisation du modèle d'impédance, par la définition des fonctions objectif et par la faculté d'introduire de l'information a priori. La paramétrisation peut être concise, l'impédance étant constante ou linéaire suivant une direction verticale, dans un certain nombre de couches de géométrie inconnue: Les paramètres inconnus sont ici non seulement les impédances acoustiques mais aussi les emplacements des interfaces ainsi que leur nombre.

Une méthode pour modéliser un paramètre physique tel que l'impédance acoustique d'un milieu hétérogène est décrit par exemple dans le brevet EP 0.354.112 du demandeur.

La paramétrisation peut aussi être plus dense, le champ d'impédance étant discrétisé par utilisation d'une grille 3D. La fonction objectif sismique consiste en une norme d'un type connu $L^1$ par exemple ou $L^2$, de l'écart entre les données synthétiques et les données observées. Les données synthétiques résultent de la convolution d'une ondelette optimale donnée, calibrée aux emplacements des puits avec la série des coefficients de réflexion calculés à partir de la diagraphie d'impédance. La quantité concernée dans la fonction objectif géologique peut être l'impédance elle-même ou certaines de ses dérivées spécialement dans la direction des couches. Les types de contraintes appliquées à ces quantités peuvent être une norme de type $L^1$ ou le carré d'une norme $L^2$, de l'écart entre le modèle optimal et le modèle a priori, aussi bien que des égalités ou inégalités entre la quantité recherchée et des valeurs numériques connues. Les méthodes d'optimisation les plus pratiquées sont les méthodes de gradient conjugé ou des techniques dites de "recuit simulé".

Par Brac J. et al; "Inversion with A Priori Information: an Approach to Integrated Stratigraphic Interpretation"; in Sheriff R.E.Ed., Reservoir Geophysics, Soc. Expl. Geophys., Investigations in Geophysics 7, il est connu de choisir comme fonction objectif géologique, le carré de la norme $L^2$ de l'écart d'impédance et de l'écart du gradient d'impédance, après projection sur la direction du pendage vu dans le plan vertical des lignes sismiques. De cette façon, l'inversion d'un bloc 3D consiste en plusieurs inversions 2D multi-traces appliquées ligne sismique après ligne sismique, même si le modèle a priori est élaboré en 3D.

La fiabilité et la précision des modèles de réservoir dépendent du degré d'intégration entre les données sismiques et géologiques. Un modèle de réservoir réaliste doit combiner à un stade aussi précoce que possible du processus de réalisation, des données sismiques après sommation (post-stack) relativement exactes, des données diagraphiques de puits peu nombreuses latéralement mais précises verticalement, ainsi que des données interprétatives fournies par une étude géologique régionale. L'inversion stratigraphique après sommation (poststack) est un pas important vers l'intégation des géosciences.

Dans la suite de la description, le terme général volume "feuilleté" ou volume pourvu d'un "feuilletage", utilisé pour définir le milieu à modéliser, est pris dans son sens géométrique. Il s'agit d'un volume constitué d'un ensemble de feuilles ou surfaces connexes et disjointes dont la réunion constitue le volume.

## La méthode selon l'invention

La méthode selon l'invention a pour objet d'obtenir un modèle optimal en trois dimensions (3D) de l'impédance présentée par une zone d'un milieu hétérogène relativement à des ondes (élastiques, électromagnétiques), ce milieu comprenant plusieurs volumes constitués chacun d'un ensemble de feuilles, les différentes feuilles étant définies à partir de données enregistrées correspondant à des ondes émanant du milieu hétérogène en réponse à des ondes qui y sont transmises, dans laquelle on construit un modèle géométrique en 3D comprenant les différents volumes feuilletés, et on construit un modèle a priori en 3D d'impédance à partir du modèle géométrique du milieu et d'une pluralité de mesures d'impédance faites à différentes profondeurs.

Dans sa définition la plus générale, la méthode est caractérisée en ce qu'elle comporte :

- la formation d'une fonction objectif globale incluant une fonction d'impédance et une fonction définie relative aux données enregistrées;

- la sélection d'un modèle de covariance en 2D, le long des feuilles des dits volumes, qui modélise les incertitudes sur le modèle a priori d'impédance, pour définir la dite fonction d'impédance pour toute la zone ; et

- la formation du modèle d'impédance optimal par une inversion stratigraphique globale des données enregistrées en utilisant le modèle a priori d'impédance, par minimisation de la fonction objectif globale.

La méthode peut être utilisée notamment pour obtenir un modèle optimal en 3D de l'impédance acoustique d'une zone du sous-sol, les différents volumes étant ici des unités sédimentaires, les mesures d'impédance étant obtenues à différentes profondeurs d'au moins un puits au travers de la zone, et les feuilles des différents volumes étant des isochrones de dépôt dans chacune de ces unités.

Suivant un mode préféré de mise en oeuvre on sélectionne un modèle de covariance exponentiel isotrope ou anisotrope.

La fonction relative aux données enregistrées est constituée par exemple par le carré de la norme $L^2$ de l'écart entre des données synthétiques formées à partir du modèle d'impédance a priori et les données enregistrées, et la fonction d'impédance est constituée par exemple d'une part par le carré de la norme $L^2$ de l'écart d'impédance, et d'autre part, du carré de la norme $L^2$ du gradient de l'écart d'impédance, après projection de ce gradient sur le plan tangent à une feuille locale des volumes (un plan de pendage par exemple).

On sélectionne un modèle de covariance exponentielle à 2D isotrope ou anisotrope.

On forme le modèle 3D d'impédance a priori par exemple par interpolation simple ou par krigeage le long d'isochrones de dépôt, des valeurs d'impédance connues dans au moins un puits au travers du milieu.

La méthode selon l'invention constitue une approche flexible pour estimer les impédances dans la bande des fréquences utilisées, contraintes par les données 3D enregistrées, les logs d'impédance (mesurés dans les puits par exemple), et les informations connues du milieu (les données géologiques tant stratigraphiques que structurales par exemple).

D'autres caractéristiques et avantages de la méthode selon l'invention, apparaîtront à la lecture de la description ci-après d'un exemple non limitatif de mise en oeuvre, en se référant aux dessins annexés où :

- les Fig.1A, 1B montrent une section d'impédance i transversale intersectant un puits après respectivement une inversion 2D multiple et une inversion 3D;
- la Fig.2 montre les incohérences entre lignes voisines d'une section d'impédance i, qui peuvent exister après une inversion multi-2D;
- la Fig.3 illustre bien en quoi l'inversion 3D contribue à atténuer les incohérences visibles sur la Fig.2;
- la Fig.4 montre différentes courbes (a), (b), (c) de variation du coefficient de corrélation entre les reflectivités associées à deux traces d'impédance adjacentes, correspondant respectivement aux cas des Fig.2, Fig.3 et au cas de la Fig.5 ci-après, les corrélations faibles vers la gauche de la figure étant dues à la présence de failles;
- la Fig.5 montre une coupe horizontale à la base du bloc considéré après une inversion 3D où les paramètres d'incertitude ont été choisis en faveur de l'information sismique;
- les Fig.6A, 6B montrent à la fois les traces d'impédance inversées et les logs (ou diagraphies) d'impédance obtenues dans des puits; et
- la Fig.7 montre un organigramme illustratif de la méthode selon l'invention.

La méthode comporte on l'a vu dans un premier temps la construction d'un modèle géométrique en 3D comprenant plusieurs volumes feuilletés qui, dans l'exemple de mise en oeuvre décrit, sont des unités sédimentaires dont les feuilles sont des isochrones de dépôt. On construit ensuite un modèle a priori d'impédance à partir de ce modèle géométrique et d'un ensemble de mesures d'impédances faites par exemple le long d'un ou plusieurs puits au travers de la zone explorée. La mise en oeuvre de ces deux étapes est décrite par exemple dans :

- Joint EAEG/EAPG/EAGO Multidisciplinary Workshop on "Developing New Reservoirs in Europe". 1994, St Petersburg; Extended Abstracts Book.

Une étape essentielle de la méthode selon l'invention consiste à minimiser une fonction objectif globale calculée sur l'ensemble du modèle 3D au moyen d'une méthode de gradient conjugué. Cette fonction objectif globale est constituée de deux termes. Le premier, qui est le terme sismique, est constitué par le carré de la norme $L^2$ de l'écart entre les données synthétiques et les données observées. Le second, qui est le terme d'impédance, est constitué d'une part par le carré de la norme $L^2$ de l'écart d'impédance et d'autre part par le carré de la norme $L^2$ du gradient de l'écart d'impédance, après projection sur le plan du pendage. Cette méthode d'inversion stratigraphique 3D donne, en une seule passe, un bloc d'impédance 3D optimal compatible à la fois avec le bloc sismique 3D et le modèle 3D a priori.

Inversion stratigraphique 3D complète

La méthode d'inversion 3D complète est basée sur les deux hypothèses pratiques suivantes couramment utilisées dans le cadre d'études relatives aux réservoirs, i.e. :

- la fonction qui, aux traces d'impédance dans le domaine temps, associe les traces sismiques, est calculée par convolution d'une ondelette donnée avec les coefficients de réflexion de chaque trace;

- la structure géologique comporte des pendages modérés, des failles de faible rejet et de faibles variations latérales de vitesse.

- On admet en outre que l'ondelette sismique est constante sur l'ensemble du bloc 3D considéré et que le bruit altérant les traces sismiques est un bruit blanc non corrélé d'une trace à l'autre.

- On considère également que les incertitudes relatives au modèle d'impédance a priori sont modélisées au moyen d'une covariance exponentielle 2D. De nombreux modèles de covariance peuvent être utilisés. Certains sont définis simplement par une variance et une longueur de corrélation, mais le choix d'un opérateur de covariance exponentielle est particulièrement intéressant dans la mesure où la norme associée à son inverse est connue et facile à calculer.

**La fonction objectif sismique**

La fonction objectif sismique mesure l'écart entre chaque trace sismique et la trace synthétique liée à cette dernière :

$$Q_S = \frac{1}{2\sigma_S^2} \sum_{i,j,k} \left( (R * W)_{ijk} - S_{ijk}^{obs} \right)^2 \qquad (1)$$

Dans cette équation, $\sigma_S = S_{RMS}/\rho$ est l'incertitude relative à l'amplitude sismique, $S_{RMS}$ étant la valeur efficace des données sismiques et $\rho$ le rapport signal-bruit. R désigne la trace du coefficient de réflexion et W l'ondelette obtenue après calibrage des données de puits et des données sismiques. $S^{obs}_{ijk}$ est le i-ième échantillon de la j-ième trace de la k-ième section ou ligne du bloc sismique 3D.

**La fonction objectif d'impédance**

Dans chaque unité sédimentaire, on considère que la fonction de covariance 2D le long de chaque surface de corrélation est la suivante :

$$\mathrm{cov}(\delta Z(x). \delta Z(y)) = C(x,y) = \sigma^2 \exp\left( -\frac{\|x - y\|}{\lambda} \right) \qquad (2)$$

où $\delta Z(x)$ est l'écart d'impédance par rapport au modèle a priori à l'emplacement x et $\delta Z(y)$, l'écart correspondant en y, $\sigma^2$ étant la variance et $\lambda$ la longueur de corrélation. L'opérateur de covariance étant :

$$C : \varphi \to \varphi = C(\varphi) = \int C(x,y) \hat{\varphi}(y) dS(y) \qquad (3)$$

Comme le savent les spécialistes, l'inverse de cet opérateur est :

$$H : \varphi \to \varphi = H(\varphi) = \frac{1}{2\pi \sigma^2} \left( \frac{\varphi}{\lambda^2} - \Delta\varphi \right) \qquad (4)$$

et la norme associée est :

$$\|\varphi\|^2 c^{-1} = \int \varphi(x)\, \hat{\varphi}(x)\, dS(x)$$

$$= \frac{1}{2\pi\sigma^2}\left(\frac{1}{\lambda^2}\int\|\varphi\|^2\, dS + \int\|\nabla\varphi\|^2\, dS\right) \tag{6}$$

les symboles $\Delta$, $\nabla$ désignant respectivement le laplacien et le gradient.

Alors que l'inversion 2D implique comme l'on sait un modèle de covariance 1D le long des lignes de corrélation, l'inversion 3D implique un modèle de covariance 2D le long des surfaces de corrélation (les isochrones de dépôt) déduites de l'interprétation stratigraphique et structurale.

La discrétisation de $\|\varphi\|^2_{c-1}$ donne la fonction objectif géologique.

## Le contenu fréquentiel des impédances inversées

Les fréquences contenues dans le modèle a priori qui sont supérieures à celles fournies par la bande passante sismique ne sont pas contrôlées dans le processus d'inversion. C'est la raison pour laquelle elles sont généralement rejetées. Les informations basse fréquence après inversion ne proviennent pas des données sismiques mais du modèle d'impédance a priori. Dans de nombreux cas, ces informations basse fréquence provenant des puits présentent une importance cruciale en matière de prédiction de propriétés quantitatives des réservoirs à partir d'impédances inversées. Ainsi, des informations basse fréquence supplémentaires telles que les vitesses sismiques pourraient être utilisées lors de la construction du modèle d'impédance a priori.

## Choix des paramètres d'incertitude

La variance $\sigma^2$ mesure la variabilité de l'écart d'impédance par rapport au modèle a priori, le long des isochrones de dépôt. La longueur de corrélation $\lambda$ contrôle la continuité latérale de cet écart d'impédance le long des surfaces stratigraphiques. En pratique, on peut évaluer une valeur pour chaque unité géologique soit à partir d'informations géologiques antérieures, soit à partir d'analyses variographiques de valeurs d'impédance aux puits, le long d'isochrones de dépôt. Leurs valeurs peuvent aussi être choisies selon la confiance accordée par l'interprétateur au modèle a priori (nombre de puits, environnement géologique connu aux puits).

Résultats numériques

L'efficacité de la méthode selon l'invention a été comparée à celle qu'apporte la méthode connue d'inversion 2D multitrace définie clans le brevet EP 0.354.112 précité, sur la base de données d'un bloc sismique 3D acquis en mer du Nord. Ce bloc s'étend sur 8 km$^2$ entre 2,0 et 2,8 s. Le maillage est constitué de 35 lignes avec 130 traces et 201 échantillons temps, ce qui correspond à environ 900 000 noeuds. Les pas d'échantillonnage sont de 75 m entre les lignes, 25 m entre les traces et 4 ms en temps. Neuf diagraphies d'impédance ont été choisis pour la construction du modèle a priori.

## L'inversion 3D comparée à l'inversion 2D multitrace

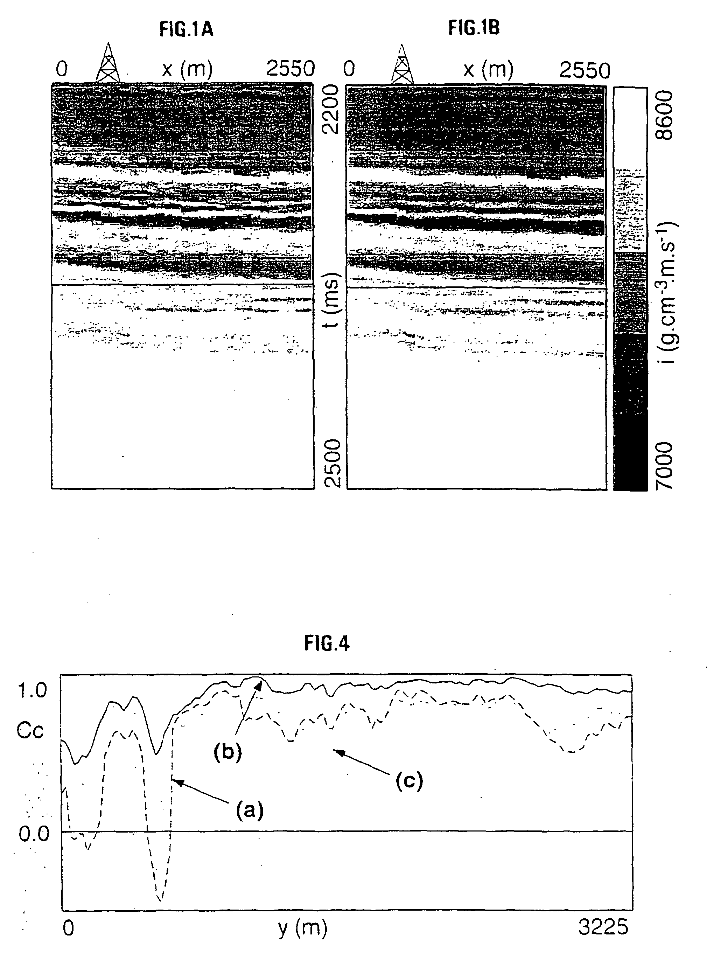

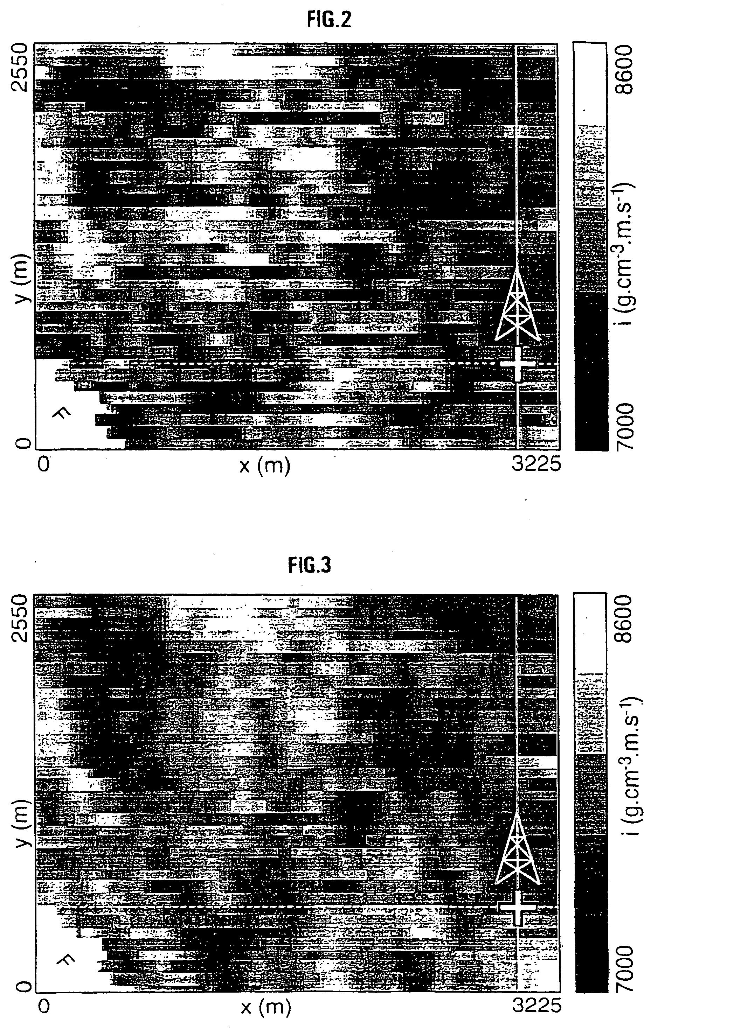

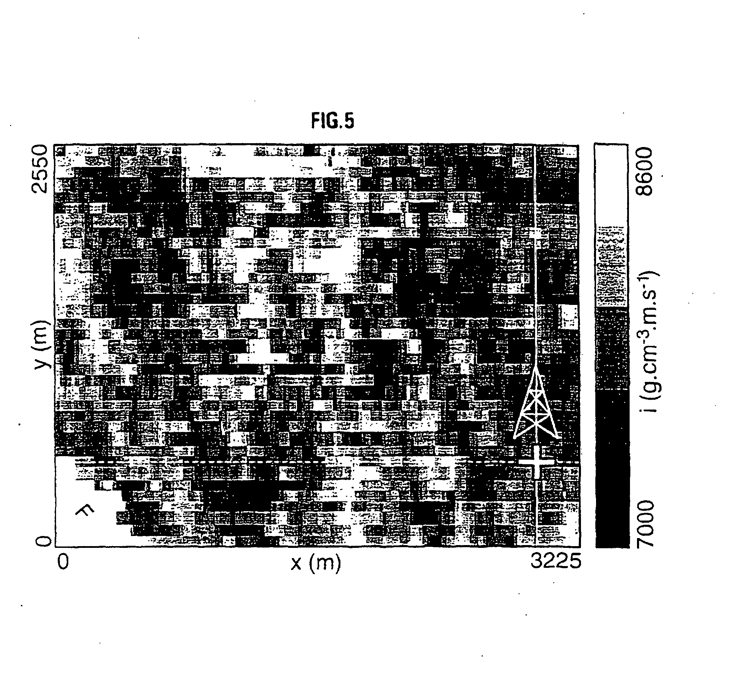

En utilisant le même modèle 3D a priori, on a réalisé à la fois des inversions multitrace 2D et des inversions 3D sur ce jeu de données. Les Fig. 1A, 1B, relatives à la coupe transversale traversant le puits (trait continu blanc sur la Fig.2), et les Fig.2 et 3, relatives à la coupe effectuée le long d'un horizon sismique, montrent l'amélioration de la continuité le long des surfaces stratigraphiques apportée par l'inversion 3D. F représente ici une faille. Cette observation est confirmée par la Fig.4, où les courbes (a), (b), ( c) représentent le coefficient de corrélation entre les réflectivités associées aux traces d'impédance optimale des lignes (trait pointillé blanc sur la Fig.2) et 9 et de même abscisse x, respectivement après une inversion multi-2D, après une inversion 3D et après une inversion 3D. les données sismiques étant favorisées. Pour les deux inversions (a) et (b), les paramètres sont les suivants : $\sigma_S$ = 30 %, $\sigma$ = 250 g.cm$^{-3}$. m. s$^{-1}$ et $\lambda$ = 500 m, ce qui favorise les informations géologiques.

## L'effet des paramètres d'incertitude

Une autre inversion 3D a été réalisée avec des paramètres d'incertitude choisis en faveur des données sismiques au lieu du modèle d'impédance a priori ($\sigma_S$ = 30 %. $\sigma$ = 500 g.cm$^{-3}$.m.s$^{-1}$ et $\lambda$ = 100 m). Les données sismiques présentent une variation latérale beaucoup plus importante que celle du modèle a priori le long des horizons. De ce fait, en raison de l'influence accrue des données sismiques, le résultat présenté sur la Fig. est plus "rugueux" (bruité latéralement) que celui des Fig. 2 et 3. Avec des paramètres favorisant les données sismiques, la continuité latérale de l'impédance optimale est faible. Avec des paramètres favorisant les informations géologiques, la continuité latérale est augmentée seulement le long de l'axe transversal avec une inversion multitrace 2D et elle est augmentée à la fois le long de l'axe transversal et de l'axe longitudinal avec une inversion 3D.

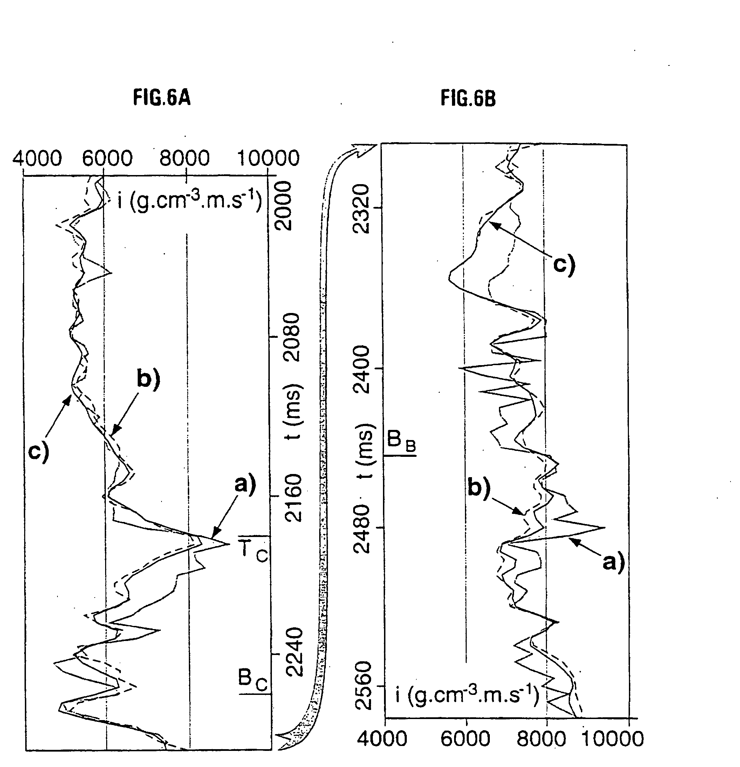

Pour les résultats obtenus à la fois avec l'inversion 2D multitrace et l'inversion 3D, comparaison a été faite entre la trace d'impédance à l'emplacement du puits et la trace d'impédance déduite de diagraphies de puits. On peut noter que ce puits a été utilisé pour construire le modèle a priori. La Fig.6 montre que la trace d'impédance obtenue après inversion 3D est légèrement meilleure que celle obtenue après inversion 2D multitrace. Sur cette figure, les symboles représentent respectivement :

- Tc, le toit du crétacé,
- Bc, la base du crétacé,
- Bb, la base du Brent,
- a), la diagraphie d'impédance.
- b), l'impédance après inversion multi-2D, et
- c), l'impédance après inversion 3D.

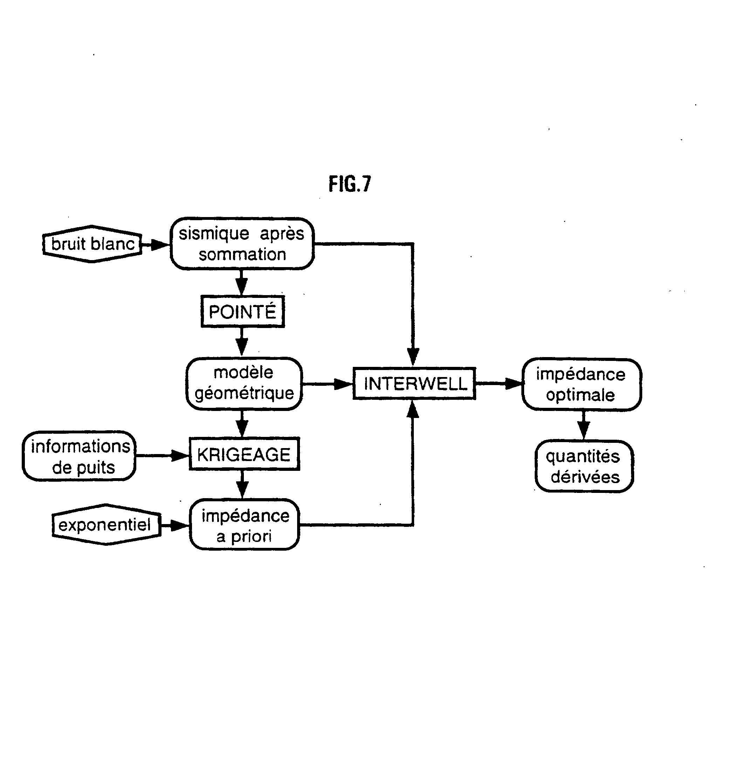

Pour réaliser l'étape d'inversion des données enregistrées en utilisant le modèle d'impédance a priori, on peut utiliser un logiciel d'inversion connu et par exemple le logiciel INTERWELL ® d'inversion stratigraphique 2D ou 3D, comme le montre l'organigramme de la Fig.7.

La méthode selon l'invention a été décrite dans une application à la modélisation de l'impédance du sous-sol. Il est bien évident qu'elle peut s'appliquer à tout autre paramètre physique sur les données enregistrées. D'une façon plus générale, on ne sortirait pas du cadre de l'invention en appliquant la méthode selon l'invention à la réalisation de tomographies dans des domaines très différents notamment dans le domaine de l'imagerie médicale ou du contrôle non destructif.

**Revendications**

1. Méthode pour obtenir un modèle optimal en trois dimensions (3D) de l'impédance présentée par une zone d'un milieu hétérogène relativement à des ondes, ce milieu comprenant plusieurs volumes constitués chacun d'un ensemble de feuilles, les différentes feuilles étant définies à partir de données enregistrées correspondant à des ondes émanant du milieu hétérogène en réponse à des ondes qui y sont transmises, dans laquelle on construit un modèle géométrique en 3D comprenant les différents volumes feuilletés, et on construit un modèle a priori en 3D d'impédance à partir du modèle géométrique du milieu et d'une pluralité de mesures d'impédance faites à différentes profondeurs, **caractérisée en ce qu'**elle comporte :

   - la formation d'une fonction objectif globale incluant une fonction d'impédance et une fonction définie relative aux données enregistrées;

   - la sélection d'un modèle de covariance en 2D, le long des feuilles des dits volumes, qui modélise les incertitudes sur le modèle a priori d'impédance, pour définir la dite fonction d'impédance pour toute la zone ; et

   - la formation du modèle d'impédance optimal par une inversion stratigraphique globale des données enregistrées en utilisant le modèle a priori d'impédance, par minimisation de la fonction objectif globale.

2. Méthode selon la revendication 1, **caractérisé en ce que** le milieu hétérogène est une zone du sous-sol, les différents volumes sont des unités sédimentaires, les mesures d'impédance acoustique sont obtenues à différentes profondeurs d'au moins un puits au travers de la zone, et les feuilles des différents volumes sont des isochrones de dépôt dans chacune de ces unités.

3. Méthode selon l'une des revendications 1 ou 2, **caractérisée en ce que** les ondes émises dans le milieu sont des ondes élastiques.

4. Méthode selon l'une des revendications 1 ou 2, **caractérisée en ce que** les ondes émises dans le milieu sont des ondes électromagnétiques.

5. Méthode selon l'une des revendications précédentes, **caractérisée en ce que** la fonction relative aux données enregistrées est constituée par le carré de la norme $L^2$ de l'écart entre des données synthétiques formées à partir du modèle d'impédance a priori et les données enregistrées, et la fonction d'impédance est constituée d'une part par le carré de la norme $L^2$ de l'écart d'impédance, et d'autre part, du carré de la norme $L^2$ du gradient de l'écart d'impédance, après projection de ce gradient sur le plan tangent à une feuille locale des volumes.

6. Méthode selon la revendication 5, **caractérisée en ce que** le plan tangent à une feuille locale des volumes, est un plan de pendage.

7. Méthode selon l'une des revendications précédentes, **caractérisée en ce que** l'on sélectionne un modèle de covariance exponentielle à 2D, isotrope ou anisotrope.

8. Méthode selon l'une des revendications précédentes, **caractérisée en ce que** l'on forme le modèle 3D d'impédance a priori par interpolation simple ou par krigeage le long d'isochrones de dépôt, des valeurs d'impédance connues dans au moins un puits au travers du milieu.


**Patentansprüche**

1. Verfahren zum Erhalt eines optimalen dreidimensionalen (3D) Modells der Impedanz einer Zone eines bezüglich Wellen heterogenen Milieus oder Mediums, wobei dieses Milieu mehrere Volumina, je gebildet durch eine Gesamtheit dünner Schichten bzw. Blätter, umfasst, und die verschiedenen Blätter, ausgehend von aufgezeichneten Daten entsprechend Wellen definiert werden, die aus einem heterogenen Milieu in Abhängigkeit von hier hinein übertragenen Wellen stammen, bei dem man ein geometrisches 3D-Modell, das unterschiedliche Blatt- oder Dünnschichtvolumina umfasst, konstruiert, und man ein 3D-a-priori-Impedanzmodell, ausgehend vom geometrischen Modell des Milieus bzw. Mediums und von einer Vielzahl von auf unterschiedlichen Tiefen genommenen Impedanzmessungen konstruiert, **dadurch gekennzeichnet, dass** es umfasst:

   - die Bildung einer globalen Zielfunktion einschließlich einer Impedanzfunktion und einer bezüglich der aufgezeichneten Daten definierten Funktion;

   - die Auswahl eines 2D-Kovarianzmodells längs Blättern dieser Volumina, wodurch die Unsicherheiten hinsichtlich des a-priori-Impedanzmodells modelliert werden, um diese Impedanzfunktion für die gesamte Zone zu definieren; und

   - die Bildung des optimalen Impedanzmodells durch eine stratigraphische Globalinversion der aufgezeichneten Daten bei Verwendung des a-priori-Impedanzmodells, unter Minimierung der globalen Zielfunktion.

2. Verfahren nach Anspruch 1, **dadurch gekennzeichnet, dass** das heterogene Milieu eine unterirdische Zone ist, wobei die unterschiedlichen Volumina Sedimenteinheiten sind und die Messungen der akustischen Impedanz auf unterschiedlichen Tiefen wenigstens eines durch diese Zone geführten Bohrlochs erhalten werden, und die Blätter der verschiedenen Volumina Lagerungsisochrone jeder dieser Einheiten sind.

3. Verfahren nach einem der Ansprüche 1 oder 2, **dadurch gekennzeichnet, dass** die im Milieu ausgesandten Wellen elastische Wellen sind.

4. Verfahren nach einem der Ansprüche 1 oder 2, **dadurch gekennzeichnet, dass** die im Milieu ausgesandten Wellen elektromagnetische Wellen sind.

5. Verfahren nach einem der vorhergehenden Ansprüche, **dadurch gekennzeichnet, dass** die Funktion bezüglich der aufgezeichneten Daten gebildet wird durch das Quadrat der $L^2$-Norm der Abweichung zwischen synthetischen Daten, die ausgehend vom a-priori-Impedanzmodell gewonnen wurden sowie den aufgezeichneten Daten, und die Impedanzfunktion gebildet wird einerseits durch das Quadrat der $L^2$-Norm der Impedanzabweichung und andererseits das Quadrat der $L^2$-Norm des Gradienten der Impedanzabweichung nach Projektion dieses Gradienten auf die Tangentenebene an eine lokale Schicht bzw. ein lokales Blatt der Volumina.

6. Verfahren nach Anspruch 5, **dadurch gekennzeichnet, dass** die Tangentenebene an ein lokales Blatt der Volumina eine Neigungsebene der Lagerung ist.

**7.** Verfahren nach einem der vorhergehenden Ansprüche, **dadurch gekennzeichnet, dass** man ein exponentielles 2D-Kovarianzmodell, das isotrop oder anisotrop ist, wählt.

**8.** Verfahren nach einem der vorhergehenden Ansprüche, **dadurch gekennzeichnet, dass** man das 3D-a-priori-Impedanzmodell durch einfache Interpolation oder durch sog. Kriging längs Lagerungsisochronen der bekannten Impedanzwerte in wenigstens einem das Milieu durchsetzenden Bohrloch bildet.

**Claims**

**1.** Method for obtaining an optimal model in three dimensions (3D) of the impedance presented by a zone of a heterogeneous medium relative to waves, this medium comprising a plurality of volumes each formed of an assembly of sheets, the different sheets being defined from recorded data corresponding to waves emanating from the heterogeneous medium in response to waves which are transmitted in it, in which a 3D geometric model is constructed comprising the different foliated volumes and an *a priori* 3D impedance model is constructed from the geometric model of the medium and a plurality of impedance measurements made at different depths, ***characterised by*** *the fact that* it includes:

- formation of a global objective function including an impedance function and a function defined relative to the recorded data;

- selection of a 2D covariance model, along the sheets of the said volumes, which models the uncertainties in the *a priori* impedance model, to define the said impedance function for the whole zone; and

- formation of the optimal impedance model by global stratigraphic inversion of the recorded data using the *a priori* impedance model, by minimisation of the global objective function.

**2.** Method as described in claim 1, ***characterised by*** *the fact that* the heterogeneous medium is a sub-soil zone, the different volumes are sedimentary units, the acoustic impedance measurements are obtained at different depths of at least one well through the zone and the sheets of the different volumes are deposition isochrones in each of these units.

**3.** Method as described in one of claims 1 or 2, ***characterised by*** *the fact that* the waves emitted in the medium are elastic waves.

**4.** Method as described in one of claims 1 or 2, ***characterised by*** *the fact that* the waves emitted in the medium are electromagnetic waves.

**5.** Method as described in one of the preceding claims, ***characterised by*** *the fact that* the function relating to the recorded data is formed by the square of the $L^2$-norm of the deviation between synthetic data formed from the *a priori* impedance model and the recorded data, and the impedance function is formed on the one hand by the square of the $L^2$-norm of the impedance deviation and, on the other, of the square of the $L^2$-norm of the gradient of the impedance deviation, after projection of this gradient onto the plane tangential to a local sheet in the volumes.

**6.** Method as described in claim 5, ***characterised by*** *the fact that* the plane tangential to a local sheet in the volumes is a dip plane.

**7.** Method as described in one of the preceding claims, ***characterised by*** *the fact that* a 2D, isotropic or anisotropic exponential covariance model is selected.

**8.** Method as described in one of the preceding claims, ***characterised by*** *the fact that* the 3D *a priori* impedance model is formed by simple interpolation or by kriging along deposition isochrones of the known impedance values in at least one well through the medium.

**FIG.1A**

**FIG.1B**

**FIG.4**

## FIG.2

## FIG.3

## FIG.5

## FIG.6A

## FIG.6B

## FIG.7